# EUROPEAN PATENT APPLICATION

(11) **EP 3 675 474 A1**
(43) Date of publication of application: **01.07.2020**
(21) Application number: 19161798.4
(22) Date of filing: 11.03.2019
(51) Int. Cl.: H04M 3/428, G06F 16/335, H04L 29/08, H04M 3/42, H04W 4/16

(54) **SYSTEM AND METHOD FOR CUSTOMIZING A CALLER'S MUSIC-ON-HOLD EXPERIENCE BASED ON PERSONAL PREFERENCES**

(30) Priority: 31.12.2018 US 201816236988
(71) Applicant: Synchronoss Technologies, Inc., Bridgewater, NJ 08807 (US)
(72) Inventor: EMELYANOV, Eugene, Bridgewater, New Jersey 08807 (US)
(74) Representative: Branderhorst, Matthijs Pieter Arie

(57) **Abstract**

A computer implemented system and method for customized music-on-hold based on user preferences. The method comprises requesting one or more music play histories of a user, wherein the one or more music play histories are requested from one or more music player applications on a user device of the user; receiving the one or more music play histories; analyzing the one or more music play histories to determine one or more music preferences for the user; and storing the one or more music preferences based on the analyzed music play history.

## Description

### BACKGROUND OF THE INVENTION

### Field of the Invention

Embodiments of the present invention generally relate to music-on-hold systems and, more particularly, to techniques for customizing a caller's music-on-hold experience based on personal preferences.

### Description of the Related Art

When calling various businesses, customers are often directed to talk to call center agents. Often, the customers are put on hold while the call center agent retrieves information about the customer. Typically, when a customer is put on hold, music is played for the user to listen to while the customer is waiting, often repeating in cycles. The combination of having to wait combined with music that the customer dislikes, could result in the customer getting agitated or even hanging up before their business is completed.

Some of the previously proposed systems allow a user to customize their music preferences by logging into a system and selecting what type of music they prefer. The music preferences are saved, such that when the user is put on hold, music matching their music preferences is played.

Manually selecting music preferences is tedious and music preferences may differ based on the time of day or may change based on a release of a new artist or song that the user enjoys. With current systems, the user must then log back into the service and manually update their music preferences. This results in a poor user experience.

Therefore, there is a need for a system and method for automatically customizing a caller's music-on-hold experience based on personal preferences.

### SUMMARY OF THE INVENTION

A system and method for automatically customizing a caller's music-on-hold experience based on personal preferences is provided. The method for customizing a caller's music-on-hold experience based on personal preferences comprises requesting one or more music play histories of a user, wherein the one or more music play histories are requested from one or more music player applications on a user device of the user; receiving the one or more music play histories; analyzing the one or more music play histories to determine one or more music preferences for the user; and storing the one or more music preferences based on the analyzed music play history.

In another embodiment, a non-transitory computer readable medium for automatically customizing a caller's music-on-hold experience based on personal preferences is described. The computer readable medium stores computer instructions that, when executed by at least one processor causes the at least one processor to perform the method for customizing a caller's music-on-hold experience based on personal preferences.

In yet another embodiment, a customized music-on-hold server is described. The server comprises a) at least one processor; b) at least one input device; and c) at least one storage device storing processor-executable instructions which, when executed by the at least one processor, perform a method to: request one or more music play histories of a user, wherein the one or more music play histories are requested from one or more music player applications on a user device of the user; receive the one or more music play histories; analyze the one or more music play histories to determine one or more music preferences for the user; and store the one or more music preferences based on the analyzed music play histories.

Other and further embodiments of the present invention are described below.

### BRIEF DESCRIPTION OF THE DRAWINGS

Figure 1 is a block diagram of a system for customizing a caller's music-on-hold experience based on personal preferences, according to one or more embodiments;
Figure 2 depicts a flow diagram of a method for automatically determining music preferences of a user, according to one or more embodiments;
Figure 3 depicts a flow diagram of a method for using music preferences stored by a customized music-on-hold (CMoH) system, according to one or more embodiments; and
Figure 4 depicts a computer system that can be utilized in various embodiments of the present invention to implement the computer and/or the display, according to one or more embodiments.

While the system and method is described herein by way of example for several embodiments and illustrative drawings, those skilled in the art will recognize that the system and method for customizing a caller's music-on-hold experience based on personal preferences is not limited to the embodiments or drawings described. It should be understood, that the drawings and detailed description thereto are not intended to limit embodiments to the particular form disclosed. Rather, the intention is to cover all modifications, equivalents and alternatives falling within the spirit and scope of the system and method for automatically customizing a caller's music-on-hold experience based on personal preferences defined by the appended claims. Any headings used herein are for organizational purposes only and are not meant to limit the scope of the description or the claims. As used herein, the word "may" is used in a permissive sense (i.e., meaning having the potential to), rather than the mandatory sense (i.e., meaning must). Similarly, the words "include", "including", and "includes" mean including, but not limited to.

### DETAILED DESCRIPTION OF EMBODIMENTS

Techniques are disclosed for automatically customizing music-on-hold. A user downloads a customized music-on-hold application (CMoH app) to their mobile device. The CMoH app generates a user profile for the user. The user profile includes at least one or more telephone numbers of the user, such as a work telephone number, a cell number, a home number, and the like. The user profile may include personal information such as the user's name, address, location, and the like. The CMoH app then determines the user's musical preferences. The CMoH app retrieves the user's music play history from various sources, such as the phone's native music players, streaming services (e.g., PANDORA®, SPOTIFY®), cloud services used for storing and playing user content, and the like. Each music play history is retrieved from each source via each source's application programming interface (API). In some embodiments, an algorithm within the CMoH app determines the user's music preference based on the retrieved music play histories. In some embodiments, the music play histories are sent to the CMoH server for analysis and storage. The algorithm looks at a frequency of played songs, quantity of music of a specific genre, patterns of what music is played during certain days and/or times of the day, and the like. The user's music preferences are added to the user profile and stored for access by businesses that want customized music-on-hold for their customers. Once the user preferences are determined and stored, the CMoH app periodically retrieves the user's recent music play history. The analysis is performed and updates are made to the user's music preferences. In some embodiments, the music preferences are updated weekly. In some embodiments, the music preferences are updated monthly; however, any time period may be used. In some embodiments, an update of the music preferences may be initiated on demand by a request from a business that subscribes to the CMoH service. In some embodiments, the user may manually initiate an analysis of their recent music play history and have their music preferences updated on demand.

When a user calls a business that has subscribed to the CMoH service, an API request is sent to the CMoH server with, for example, the caller's phone number as an attribute in order to retrieve the caller's music preferences. In parallel, the business processes the received call. The caller's music preferences are cached for the duration of the call. If during the call the caller is placed on hold, the business retrieves music matching the caller's music preferences and plays the retrieved music for the caller for as long as the caller is on hold. Listening to music that is enjoyable to the caller may result in the caller staying on the call, even when on hold.

Various embodiments of a system and method for automatically customizing a caller's music-on-hold experience based on personal preferences are described. In the following detailed description, numerous specific details are set forth to provide a thorough understanding of claimed subject matter. However, it will be understood by those skilled in the art that claimed subject matter may be practiced without these specific details. In other instances, methods, apparatuses or systems that would be known by one of ordinary skill have not been described in detail so as not to obscure claimed subject matter.

Some portions of the detailed description that follow are presented in terms of algorithms or symbolic representations of operations on binary digital signals stored within a memory of a specific apparatus or special purpose computing device or platform. In the context of this particular specification, the term specific apparatus or the like includes a general-purpose computer once it is programmed to perform particular functions pursuant to instructions from program software. Algorithmic descriptions or symbolic representations are examples of techniques used by those of ordinary skill in the signal processing or related arts to convey the substance of their work to others skilled in the art. An algorithm is here, and is generally, considered to be a self-consistent sequence of operations or similar signal processing leading to a desired result. In this context, operations or processing involve physical manipulation of physical quantities. Typically, although not necessarily, such quantities may take the form of electrical or magnetic signals capable of being stored, transferred, combined, compared or otherwise manipulated. It has proven convenient at times, principally for reasons of common usage, to refer to such signals as bits, data, values, elements, symbols, characters, terms, numbers, numerals or the like. It should be understood, however, that all of these or similar terms are to be associated with appropriate physical quantities and are merely convenient labels. Unless specifically stated otherwise, as apparent from the following discussion, it is appreciated that throughout this specification discussions utilizing terms such as "processing," "computing," "calculating," "determining" or the like refer to actions or processes of a specific apparatus, such as a special purpose computer or a similar special purpose electronic computing device. In the context of this specification, therefore, a special purpose computer or a similar special purpose electronic computing device is capable of manipulating or transforming signals, typically represented as physical electronic or magnetic quantities within memories, registers, or other information storage devices, transmission devices, or display devices of the special purpose computer or similar special purpose electronic computing device.

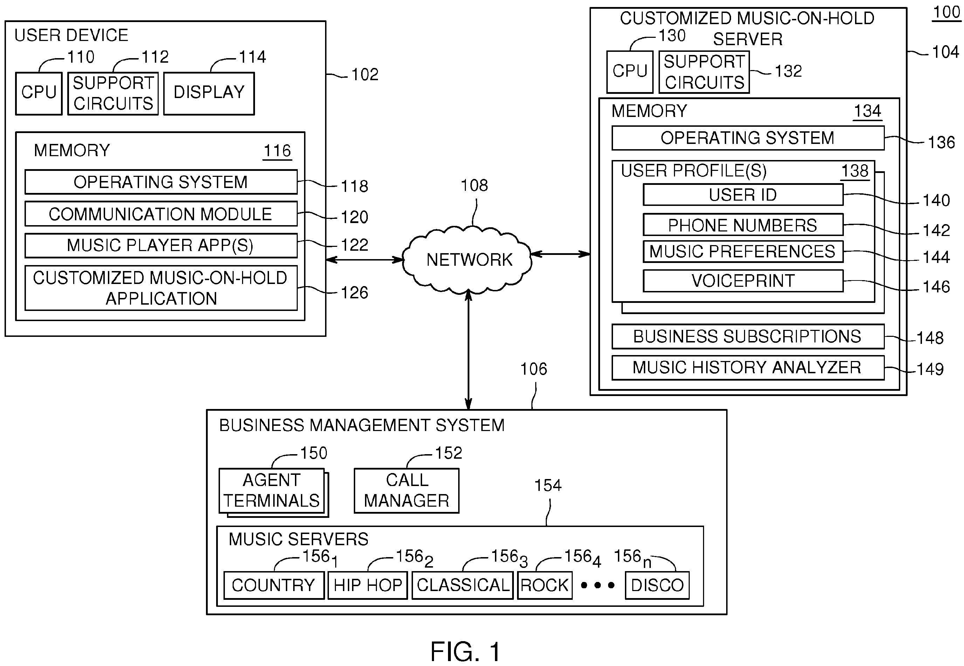

Figure 1 is a block diagram of a system 100 for customizing a caller's music-on-hold experience based on personal preferences, according to one or more embodiments. The system 100 includes a user device 102, a customized music-on-hold server 104, and a business management system 106, communicatively coupled to one another via a network 108.

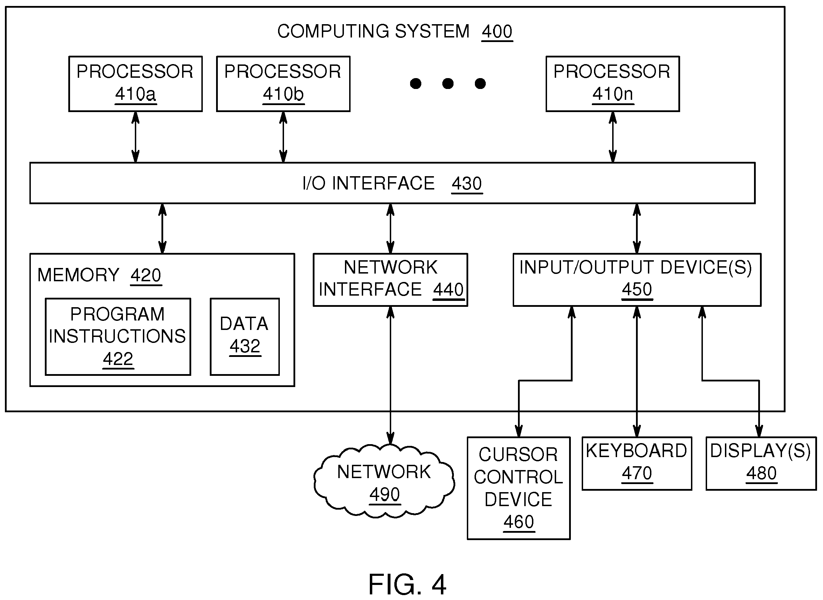

The user device 102 is a type of computing device, for example, a mobile device, a desktop computer, laptop, tablet computer, gaming system, and the like. One example of a suitable computer is shown in Figure 4, which will be described in detail below. The user device 102 includes a Central Processing Unit (CPU) 110, support circuits 112, a display 114, and a memory 116. The CPU 110 may include one or more commercially available microprocessors or microcontrollers that facilitate data processing and storage. The various support circuits 112 facilitate the operation of the CPU 110 and include one or more clock circuits, power supplies, cache, input/output circuits, and the like. The memory 116 includes at least one of Read Only Memory (ROM), Random Access Memory (RAM), disk drive storage, optical storage, removable storage and/or the like.

The memory 116 includes an operating system 118, a communication module 120, one or more music player apps 122, and a customized music-on-hold (CMoH) application 126. The CMoH application 126 may be downloaded from an e-commerce mobile application store (not shown), for example, the APPLE® App Store or the GOOGLE® Play Store.

The CMoH server 104 is a computing device, for example, a desktop computer, laptop, tablet computer, and the like, or it may be a cloud based server (e.g., a blade server, virtual machine, and the like). One example of a suitable computer is shown in Figure 4, which will be described in detail below. According to some embodiments, the CMoH server 104 includes a Central Processing Unit (CPU) 130, support circuits 132, and a memory 134. The CPU 130 may include one or more commercially available microprocessors or microcontrollers that facilitate data processing and storage. The various support circuits 132 facilitate the operation of the CPU 130 and include one or more clock circuits, power supplies, cache, input/output circuits, and the like. The memory 134 includes at least one of Read Only Memory (ROM), Random Access Memory (RAM), disk drive storage, optical storage, removable storage and/or the like.

The memory 134 includes an operating system 136, a plurality of user profiles 138, business subscriptions 148, and a music history analyzer 149. Each of the plurality of user profiles 138 includes a user ID 140, one or more phone numbers 142 associated with the user, the music preferences 144 of the user, and a voiceprint 146 of the user. The business management system 106 may be any business system that subscribes to the CMoH service. The business management system 106 may include a plurality of agent terminals 150 used to communicate with callers, a call manager 152 used to retrieve a caller's music preferences, and a plurality of music servers, for example 156₁, that stores country music, 156₂ that stores hip hop music, 156₃ that stores classical music, 156₄ that stores rock music, ... 156ₙ that stores disco music (collectively referred to as music servers 156).

The user device 102, the CMoH server 104, and the business management system 106 may be connected to external systems via a network 108, such as a Wide Area Network (WAN) or Metropolitan Area Network (MAN), which includes a communication system that connects computers (or devices) by wire, cable, fiber optic and/or wireless link facilitated by various types of well-known network elements, such as hubs, switches, routers, and the like. The network interconnecting some components may also be part of a Local Area Network (LAN) using various communications infrastructure, such as Ethernet, Wi-Fi, a personal area network (PAN), a wireless PAN, Bluetooth, and the like.

When a user downloads the customized music-on-hold (CMoH) application 126 onto user device 102, the user registers with the CMoH service. At that time, the CMoH service generates a user profile 138 for the user. The user profile 138 may include personal information, for example, a user name, address, location, and the like. The user profile 138 will also include a user ID 140, one or more phone numbers 142 associated with the user, music preferences 144 determined for the user, and a voiceprint 146 or other mechanism to determine the identity of the user when, for example, one or more phone numbers are shared by more than one user (e.g., a home phone number). At any time, the user may select what personal information the user will allow the CMoH service to share and what information the user wishes to keep private. The user's music preferences are then determined.

The CMoH application 126 retrieves the user's music play history from the music player apps 122 on the user device 102. Music player apps 122 may include music player apps 122 pre-installed on the user device 102 by the device manufacturer, and music player apps 122 installed on the user device 102 by the user. Music player apps 122 may include pure streaming player apps such as PANDORA®, SPOTIFY®, and the like that don't play files stored on the phone, and players such as VERIZON® Cloud that plays both local files and a user's music files from the cloud. In addition, there are players such as APPLE® Music, GOOGLE® Play™ Music, etc. that can play local files and stream music from their services. The CMoH application 126 retrieves the music play history from the one or more music player apps 122 on the user device 102. The CMoH application 126 retrieves each music play history via Application Programming Interfaces (APIs).

In some embodiments, when all music histories are retrieved, the CMoH application 126 analyzes the music histories and determines the music preferences for the user. In some embodiments, when all music histories are retrieved, the CMoH application 126 sends the music histories to the CMoH server 104 for analysis by the music history analyzer 149. The music histories are analyzed to determine music preferences based on a frequency of played songs, predominance of a specific genre of music, and the like. Music preferences are also determined based on patterns in a user's music histories, determining whether certain types of music are played more often based on the time of day and/or day of the week. In embodiments where the CMoH application 126 performs the analysis, the music preferences are sent to the CMoH server 104. The CMoH server 104 stores the music preference information and any other necessary data in the user profile 138 with the music preferences 144.

When a user calls a business using their communication module 120 on their user device 102, the call may be directed to an agent terminal 150. While the call is being set up between the caller and the agent, the call manager 152 sends an API call to the customized music-on-hold (CMoH) server 104 requesting the caller's music preferences 144. The music preferences are cached by the customer manager. At any time during the call between the caller and the agent, when the caller is put on hold, the call manager 152 retrieves music from one of the music servers 154 that matches the user's music preferences for that day and time, and plays the music for the caller until the caller is no longer on hold. As such, while on hold a user listens to music of their liking without requiring the user to manually preselect the type of music he or she enjoys.

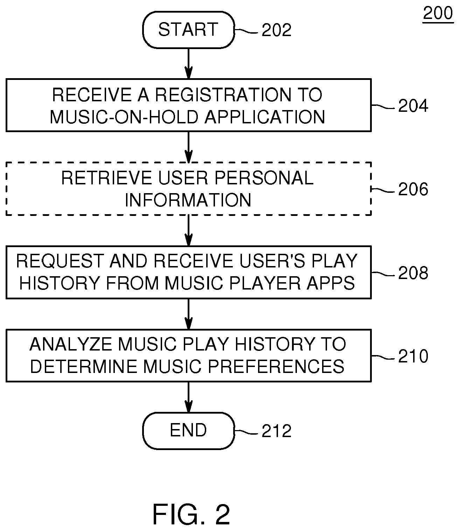

Figure 2 depicts a flow diagram of a method 200 for automatically determining music preferences of a user, according to one or more embodiments. The method 200 starts at step 202 and proceeds to step 204.

At step 204, a registration is received by a customized music-on-hold application. Once the registration is received, the CMoH application automatically determines a user's music preferences.

Optionally, at step 206, personal information of the user is retrieved. The personal information may include the user name, address, location, and the like. A user profile is generated and the personal information is stored in the user profile. In some embodiments, each piece of personal information is tagged as public information that may be shared or tagged as private information that is not to be shared by the CMoH service.

At step 208, the user's music play history is requested and received from one or more music player apps on the user device. The one or more music player apps may include a native music player on the user device, any streaming music services, and/or any cloud services that the user may use for storing and playing the user's content.

At step 210, the music play histories from the various sources are analyzed to determine the user's music preferences. The genres of music, frequency of played songs, times of day and/or days of week when certain genres are played, and the like are determined. For example, a user may listen to hip hop music on weeknights, listen to classical music on weekend mornings, and listen to country music later in the day on the weekends. These music preferences are stored in the user profile for later use. The determination of music preferences may be repeated at periodic intervals, for example, weekly or monthly. In addition, the user may at any time manually request their user preferences be updated. A business with a subscription to the CMoH service may at any time manually request an update of the music preferences of their callers. The method 200 ends at step 212.

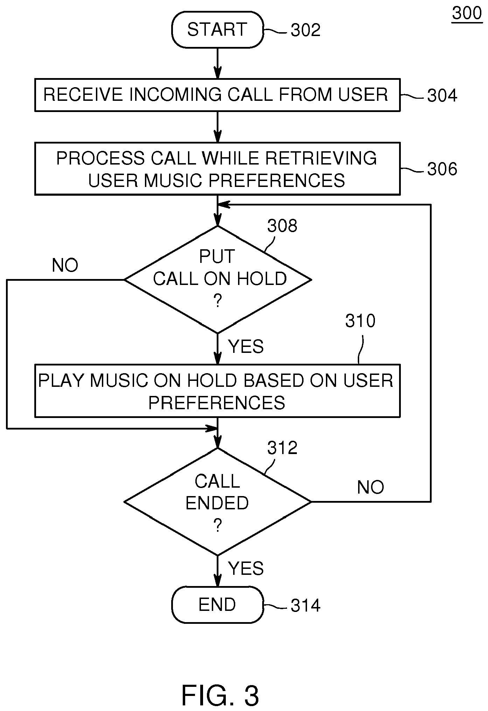

Figure 3 depicts a flow diagram of a method 300 for using music preferences stored by a customized music-on-hold (CMoH) system, according to one or more embodiments. The method 300 starts at step 302 and proceeds to step 304.

At step 304, an incoming call is received at business. The business must be a subscriber to the CMoH service.

At step 306, the call is processed. In other words, the caller is connected to an agent who can handle the caller's request. In parallel, an API call is made to the CMoH system using the caller's telephone number, which the CMoH service uses to access the caller's music preferences. If more than one user is associated with the caller's telephone number (e.g., a home phone number shared by a family), a voice sample of the caller is sent to the CMoH service and compared against a voiceprint stored in the user profile. The music preferences of the caller whose voice sample matches the voiceprint are retrieved. The call continues between the agent and the caller while the music preferences are retrieved. The music preferences are cached for the duration of the call.

At step 308, it is determined whether the caller has been put on hold. If it is determined that the caller has been put on hold, then at step 310, music is retrieved from an appropriate server that stores music that matches the caller's music preferences for the day and time of the call. However, if at step 308, the caller has not been put on hold, the method 300 proceeds to step 312. At step 312, it is determined whether the call has ended. If it is determined that the call has not ended, then the method 300 proceeds to step 308, and iterates until it is determined that the caller is put on hold or the call has ended. When the call ends, the method proceeds to step 314 and ends.

Figure 4 depicts a computer system 400 that can be utilized in various embodiments of the present invention to implement the computer and/or the display, according to one or more embodiments.

Various embodiments of system and method for automatically customizing a caller's music-on-hold experience based on personal preferences, as described herein, may be executed on one or more computer systems, which may interact with various other devices. One such computer system is computer system 400 illustrated by Figure 4, which may in various embodiments implement any of the elements or functionality illustrated in Figures 1-3. In various embodiments, computer system 400 may be configured to implement methods described above. The computer system 400 may be used to implement any other system, device, element, functionality or method of the above-described embodiments. In the illustrated embodiments, computer system 400 may be configured to implement the methods 200 and 300 as processor-executable program instructions 422 (e.g., program instructions executable by processor(s) 410) in various embodiments.

In the illustrated embodiment, computer system 400 includes one or more processors 410a-410n coupled to a system memory 420 via an input/output (I/O) interface 430. Computer system 400 further includes a network interface 440 coupled to I/O interface 430, and one or more input/output devices 450, such as cursor control device 460, keyboard 470, and display(s) 480. In various embodiments, any of the components may be utilized by the system to receive user input described above. In various embodiments, a user interface may be generated and displayed on display 480. In some cases, it is contemplated that embodiments may be implemented using a single instance of computer system 400, while in other embodiments multiple such systems, or multiple nodes making up computer system 400, may be configured to host different portions or instances of various embodiments. For example, in one embodiment, some elements may be implemented via one or more nodes of computer system 400 that are distinct from those nodes implementing other elements. In another example, multiple nodes may implement computer system 400 in a distributed manner.

In different embodiments, computer system 400 may be any of various types of devices, including, but not limited to, a personal computer system, desktop computer, laptop, notebook, or netbook computer, mainframe computer system, handheld computer, workstation, network computer, a camera, a set top box, a mobile device, a consumer device, video game console, handheld video game device, application server, storage device, a peripheral device such as a switch, modem, router, or in general any type of computing or electronic device.

In various embodiments, computer system 400 may be a uniprocessor system including one processor 410, or a multiprocessor system including several processors 410 (e.g., two, four, eight, or another suitable number). Processors 410 may be any suitable processor capable of executing instructions. For example, in various embodiments, processors 410 may be general-purpose or embedded processors implementing any of a variety of instruction set architectures (ISAs). In multiprocessor systems, each of processors 410 may commonly, but not necessarily, implement the same ISA.

System memory 420 may be configured to store program instructions 422 and/or data 432 accessible by processor 410. In various embodiments, system memory 420 may be implemented using any suitable memory technology, such as static random access memory (SRAM), synchronous dynamic RAM (SDRAM), nonvolatile/Flash-type memory, or any other type of memory. In the illustrated embodiment, program instructions and data implementing any of the elements of the embodiments described above may be stored within system memory 420. In other embodiments, program instructions and/or data may be received, sent or stored upon different types of computer-accessible media or on similar media separate from system memory 420 or computer system 400.

In one embodiment, I/O interface 430 may be configured to coordinate I/O traffic between processor 410, system memory 420, and any peripheral devices in the device, including network interface 440 or other peripheral interfaces, such as input/output devices 450. In some embodiments, I/O interface 430 may perform any necessary protocol, timing or other data transformations to convert data signals from one component (e.g., system memory 420) into a format suitable for use by another component (e.g., processor 410). In some embodiments, I/O interface 430 may include support for devices attached through various types of peripheral buses, such as a variant of the Peripheral Component Interconnect (PCI) bus standard or the Universal Serial Bus (USB) standard, for example. In some embodiments, the function of I/O interface 430 may be split into two or more separate components, such as a north bridge and a south bridge, for example. Also, in some embodiments some or all of the functionality of I/O interface 430, such as an interface to system memory 420, may be incorporated directly into processor 410.

Network interface 440 may be configured to allow data to be exchanged between computer system 400 and other devices attached to a network (e.g., network 490), such as one or more external systems or between nodes of computer system 400. In various embodiments, network 490 may include one or more networks including but not limited to Local Area Networks (LANs) (e.g., an Ethernet or corporate network), Wide Area Networks (WANs) (e.g., the Internet), wireless data networks, some other electronic data network, or some combination thereof. In various embodiments, network interface 440 may support communication via wired or wireless general data networks, such as any suitable type of Ethernet network, for example, via telecommunications/telephony networks such as analog voice networks or digital fiber communications networks; via storage area networks such as Fiber Channel SANs; or via any other suitable type of network and/or protocol.

Input/output devices 450 may, in some embodiments, include one or more display terminals, keyboards, keypads, touchpads, scanning devices, voice or optical recognition devices, or any other devices suitable for entering or accessing data by one or more computer systems 400. Multiple input/output devices 450 may be present in computer system 400 or may be distributed on various nodes of computer system 400. In some embodiments, similar input/output devices may be separate from computer system 400 and may interact with one or more nodes of computer system 400 through a wired or wireless connection, such as over network interface 440.

In some embodiments, the illustrated computer system may implement any of the operations and methods described above, such as the operations described with respect to Figure 2 and Figure 3. In other embodiments, different elements and data may be included.

Those skilled in the art will appreciate that computer system 400 is merely illustrative and is not intended to limit the scope of embodiments. In particular, the computer system and devices may include any combination of hardware or software that can perform the indicated functions of various embodiments, including computers, network devices, Internet appliances, PDAs, wireless phones, pagers, and the like. Computer system 400 may also be connected to other devices that are not illustrated, or instead may operate as a stand-alone system. In addition, the functionality provided by the illustrated components may in some embodiments be combined in fewer components or distributed in additional components. Similarly, in some embodiments, the functionality of some of the illustrated components may not be provided and/or other additional functionality may be available.

Those skilled in the art will also appreciate that, while various items are illustrated as being stored in memory or on storage while being used, these items or portions of them may be transferred between memory and other storage devices for purposes of memory management and data integrity. Alternatively, in other embodiments some or all of the software components may execute in memory on another device and communicate with the illustrated computer system via inter-computer communication. Some or all of the system components or data structures may also be stored (e.g., as instructions or structured data) on a computer-accessible medium or a portable article to be read by an appropriate drive, various examples of which are described above. In some embodiments, instructions stored on a computer-accessible medium separate from computer system 400 may be transmitted to computer system 400 via transmission media or signals such as electrical, electromagnetic, or digital signals, conveyed via a communication medium such as a network and/or a wireless link. Various embodiments may further include receiving, sending or storing instructions and/or data implemented in accordance with the foregoing description upon a computer-accessible medium or via a communication medium. In general, a computer-accessible medium may include a storage medium or memory medium such as magnetic or optical media, e.g., disk or DVD/CD-ROM, volatile or non-volatile media such as RAM (e.g., SDRAM, DDR, RDRAM, SRAM, and the like), ROM, and the like.

The methods described herein may be implemented in software, hardware, or a combination thereof, in different embodiments. In addition, the order of methods may be changed, and various elements may be added, reordered, combined, omitted or otherwise modified. All examples described herein are presented in a non-limiting manner. Various modifications and changes may be made as would be obvious to a person skilled in the art having benefit of this disclosure. Realizations in accordance with embodiments have been described in the context of particular embodiments. These embodiments are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the example configurations may be implemented as a combined structure or component. These and other variations, modifications, additions, and improvements may fall within the scope of embodiments as defined in the claims that follow.

While the foregoing is directed to embodiments of the present invention, other and further embodiments of the invention may be devised without departing from the basic scope thereof, and the scope thereof is determined.

## Claims

1. A computer implemented method for automatically customizing a caller's music-on-hold experience based on personal preferences comprising:
requesting one or more music play histories of a user, wherein the one or more music play histories are requested from one or more music player applications on a user device of the user;
receiving the one or more music play histories;
analyzing the one or more music play histories to determine one or more music preferences for the user; and
storing the one or more music preferences based on the analyzed one or more music play histories.

2. The method of claim 1, wherein one or more music play histories are from one or more streaming music services or from a cloud service that stores user generated content.

3. The method of claim 1 or 2, further comprising:
retrieving a plurality of personal information about the user;
tagging each of the plurality of personal information as public or private; and
storing the personal information and one or more music preferences in a user profile.

4. The method of any one of the preceding claims, wherein each of the received one or more music play histories is retrieved via an application programming interface.

5. The method of any one of the preceding claims, wherein the requesting, receiving, and analyzing steps are performed periodically to update the music preferences.

6. The method of any one of the preceding claims, further comprising processing a call, determining whether a caller is put on hold, and, if it is determined that the caller is put on hold, retrieving and playing music matching the caller's music preferences.

7. A non-transitory computer readable medium for storing computer instructions that, when executed by at least one processor, causes the at least one processor to perform a method for customizing a caller's music-on-hold experience based on personal preferences comprising:
requesting one or more music play histories of a user, wherein the one or more music play histories are requested from one or more music player applications on a user device of the user;
receiving the one or more music play histories;
analyzing the one or more music play histories to determine one or more music preferences for the user; and
storing the one or more music preferences based on the analyzed one or more music play histories.

8. The non-transitory computer readable medium of claim 7, wherein one or more music play histories are one or more streaming music services, or are a cloud service that stores user generated content.

9. The non-transitory computer readable medium of claim 7 or 8, further comprising:
retrieving a plurality of personal information about the user;
tagging each of the plurality of personal information as public or private; and
storing the personal information and one or more music preferences in a user profile.

10. The non-transitory computer readable medium of claim 7, wherein each of the one or more received music play histories is retrieved via an application programming interface.

11. The non-transitory computer readable medium according to any one of claims 7 to 10 or the method according to any one of claims 1 to 6, wherein the music preferences are based on a frequency of played songs and a quantity of a music genre, and optionally wherein the music preferences are further determined for a day of week and/or a time of day.

12. The non-transitory computer readable medium of claim 7, wherein the requesting, receiving, and analyzing steps are performed periodically to update the music preferences.

13. A customized music-on-hold system for customizing a caller's music-on-hold experience based on personal preferences, comprising:
a) at least one processor;
b) at least one input device; and
c) at least one storage device storing processor-executable instructions which, when executed by the at least one processor, perform a method to:
request one or more music play histories of a user, wherein the one or more music play histories are requested from one or more music player applications on a user device of the user;
receive the one or more music play histories;
analyze the one or more music play histories to determine one or more music preferences for the user; and
store the one or more music preferences based on the analyzed one or more music play histories.

14. The customized music-on-hold system of claim 13, wherein one or more music play histories are one or more streaming music services, or wherein one or more music play histories are a cloud service that stores user generated content.

15. The customized music-on-hold system of claim 13, wherein the music preferences are based on a frequency of played songs and a quantity of a music genre, and are further determined for a day of week and/or a time of day.
